# EUROPÄISCHE PATENTSCHRIFT

(11) **EP 3 185 968 B1**
(45) Veröffentlichungstag und Bekanntmachung des Hinweises auf die Patenterteilung: **15.05.2019**
(21) Anmeldenummer: 15787129.4
(22) Anmeldetag: 25.08.2015
(51) Int. Cl.: A62B 9/00, A62B 7/02, A62B 7/10, A62B 9/04, A62B 19/00, A62B 23/02, A42B 3/28, B05B 7/24, B01J 20/34

(54) **AKTIVKOHLEABSORBER**
ACTIVATED CARBON ABSORBER
ABSORBEUR À CHARBON ACTIF

(30) Priorität: 26.08.2014 CN 201420486205 U; 26.08.2014 CN 201420486333 U; 26.08.2014 CN 201420486170 U
(43) Veröffentlichungstag der Anmeldung: 05.07.2017
(73) Patentinhaber: SATA GmbH & Co. KG, 70806 Kornwestheim (DE)
(72) Erfinder: BROSE, Jens, 74354 Ottmarsheim (DE); GEHRUNG, Ralf, 71522 Backnang (DE); SCHÖNEMANN, Marco, 73240 Wendlingen (DE)
(86) Internationale Anmeldenummer: PCT/EP2015/001729
(87) Internationale Veröffentlichungsnummer: WO 2016/030012

(56) Entgegenhaltungen:
- WO-A1-01/97914
- WO-A1-2006/108042
- WO-A2-2014/012064
- DE-A1-102013 000 809
- US-A- 4 899 740
- US-A- 5 724 963
- US-A1- 2003 160 075
- US-A1- 2013 206 139
- US-A1- 2014 123 978

## Beschreibung

### TECHNISCHES GEBIET

Die vorliegende Erfindung betrifft einen Aktivkohleadsorber, insbesondere einem Aktivkohleadsorber zur Verwendung durch einen Benutzer einer fremdbelüfteten Atemschutzmaske oder Atemschutzhaube.

### TECHNISCHER HINTERGRUND

### Technologischer Hintergrund

Während Lackierverfahren, die mittels Spritzpistolen, die mit Druckluft und unter Verwendung von Lösungsmitteln betrieben werden, es unvermeidlich, dass ein sogenannter "Overspray" anfällt. Das heißt, dass der Betriebsraum mit einer unerwünschten Menge von Farbe oder Lacktröpfchen belastet wird, was auch sehr schädlich für den menschlichen Körper ist. Aus diesem Grund ist ein Gesundheitsschutz für den Arbeiter notwendig. Atemschutzhauben, die vorzugsweise über dem gesamten Kopf und insbesondere vor dem gesamten Gesichtsbereich des Arbeiters befestigt werden können, sind für diesen Zweck hervorragend geeignet und bieten ein Maximum an Gesundheitsschutz. Solche Atemschutzhauben werden üblicherweise von der Umgebungsluft unabhängig druckluftgespeist. Dazu wird Druckluft zunächst in aller Regel einem Luftaufbereitungssystem, das als erstes ein einstufiges oder ein mehrstufiges Filtersystem umfasst, zugeführt. Die gefilterte Luft wird dann über einen Druckluftschlauch einem Taillenband bzw. Hüftgurt zugeführt, das in der Regel mit mindestens einem weiteren Luftaufbereitungsmodul ausgestattet ist. Ein Luftaufbereitungsmodul kann ein Aktivkohleadsorber, wie der von WO 01/97914 A1 sein, ein anderes Luftaufbereitungsmodul kann ein Lufterwärmer oder ein Luftbefeuchter sein. Mit Hilfe des Aktivkohleadsorbermoduls können unerwünschte Dämpfe und Gase entfernt werden, die noch in der Druckluft enthalten sein können. Und durch ein Luftwärmermodul und / oder einem Luftbefeuchtermodul können weitere Vorteile für die Gesundheit und das Wohlbefinden erreicht werden. Eine weitere vorteilhafte Ausführungsform besteht darin, ein Luftregel- und verteilermodul auf dem Taillenband bzw. Hüftgurt zu befestigen. Das gesamte Gebilde wird üblicherweise als Gurteinheit bezeichnet. Eine derartige vorteilhafte Gurteinheit ist zur Verwendung bei einer Atemschutzhaube mit dem Produktnamen "Vision 2000" der SATA GmbH & Co. KG bekannt.

Heutzutage stellen die Anwender von Atemschutzsystemen erhöhte Anforderungen an die Gewährleistung von Gesundheitsschutz sowie an die Benutzerfreundlichkeit. Andererseits möchten die Hersteller und Zulieferer Produkte, die möglichst einfach produzierbar, leicht montierbar und falls erforderlich, wieder leicht demontierbar sind.

### Aufgabe der Erfindung

Aufgabe der Erfindung ist es, eine Möglichkeit aufzuzeigen, wie die zuvor genannten Probleme gelöst werden können.

### Lösung der Aufgabe der Erfindung

Die Aufgabe der Erfindung wird durch eine Aktivkohleeinheit mit den Merkmalen des Anspruchs 1 gelöst. Das erfindungsgemäße Gehäuse des Aktivkohleadsorber-Moduls ist einfach bestückbar, montierbar, handhabbar und demontierbar.

### Kurze Beschreibung der Zeichnungen

Die beigefügten Zeichnungen bilden einen Teil der vorliegenden Beschreibung und werden zum weiteren Verständnis der vorliegenden Erfindung bereitgestellt. Sie veranschaulichen mögliche Ausführungsformen der vorliegenden Erfindung und dienen dazu, die Prinzipien der vorliegenden Erfindung zusammen mit der Beschreibung zu erläutern. In den beigefügten Zeichnungen sind gleiche Bauteile mit den gleichen Bezugszeichen bezeichnet.

In den Zeichnungen ist Folgendes dargestellt:
Fig. 1A veranschaulicht den vorderen Teil des Aktivkohleadsorbers,
Fig. 1B veranschaulicht die Rückseite des Aktivkohleadsorbers;
Fig. 2A zeigt eine Montagezeichnung des Aktivkohleadsorbers mit seiner Befestigungseinheit,
Fig. 2B zeigt eine weitere Ansicht der Montagezeichnung,
Fig. 3A veranschaulicht die Befestigungseinheit näher,
Fig. 3B zeigt eine andere Ansicht der Befestigungseinheit,
Fig. 4 zeigt die Befestigung des Aktivkohleadsorbers an einem Hüftgurt,
Fig. 5 zeigt die Ansicht des Abnehmens des Aktivkohleadsorbers von dem Hüftgurt,
Fig. 6A ∼ 6B zeigen den Aktivkohleadsorber in fünf verschiedenen Drehwinkelposition nach einem Ausführungsbeispiel der vorliegenden Erfindung,

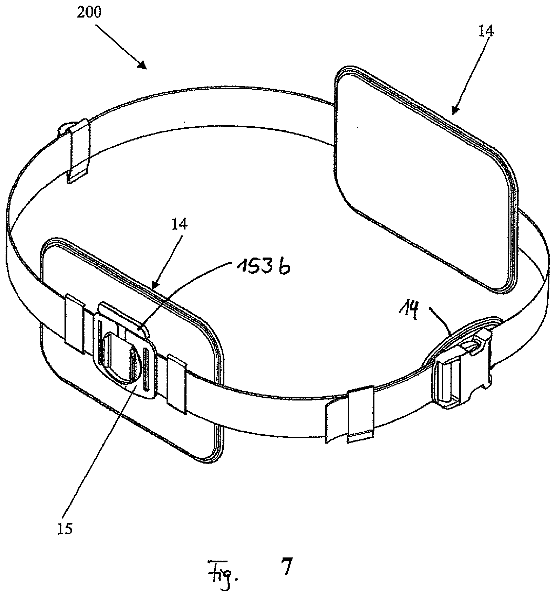

Fig. 7 zeigt den Hüftgurt einzeln,
   und
Fig. 8 zeigt eine Ausführungsform des Aktivkohleadsorbers nach der vorliegenden Erfindung.

### Ausführliche Beschreibung der Ausführungsformen

Die folgende detaillierte Beschreibung ist unter Bezugnahme auf die Zeichnungen zu verstehen, die einen Teil der Beschreibung bilden und eine beispielhafte Darstellung der Möglichkeiten aufzeigen, welche die Erfindung bietet. In den Zeichnungen sind Richtungsangaben wie oben, unten, innen und außen mit Bezug auf die beschriebenen Zeichnungen zu verstehen. Komponenten der Ausführungsformen der Erfindung können in mehreren unterschiedlichen Richtungen angeordnet sein, so dass die Richtungsangaben nur zur Veranschaulichung verwendet werden und dadurch keine Grenzen implizieren sein sollen. Die Beschreibung sollte auch so verstanden werden, dass anderen Ausführungsformen gewählt werden können und strukturelle oder logische Veränderungen basieren auf der Prämisse, dass sie entsprechend dem Umfang der Erfindung gestattet sind. Deshalb sollte die folgende detaillierte Beschreibung nicht als Einschränkung zu verstehen sein.

Der erfindungsgemäße Aktivkohleadsorber 100 ist zur Verwendung durch einen Benutzer einer fremdbelüfteten Atemschutzmaske oder Atemschutzhaube bestimmt.

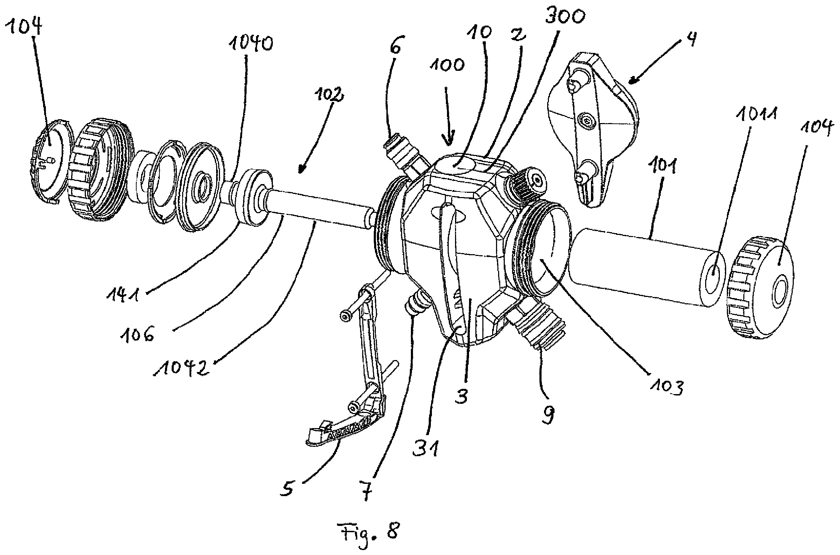

Wie in Fig. 8 zu sehen ist, weist der erfindungsgemäße Aktivkohleadsorber 100 eine Filterpatrone 101 auf, die in einem speziellen Gehäuse 2,3 angeordnet ist. Das Gehäuse2, 3 ist aus zwei hohlen Halbkugeln bzw. Halbschalen 2 und 3 zusammengesetzt. Die Halbschalen 2, 3 sind entlang einer Nahtlinie 300 miteinander verbunden. Die Verbindung kann eine lösbare oder eine unlösbare Verbindung sein. Klips-, Klebe oder Schweißverbindungen sind möglich.

Die Halbkugeln 2, 3 sind auf zwei einander gegenüberliegenden Seiten mit jeweils einer relativ großen Öffnung 103 versehen, von denen eine das Einsetzen und Entnehmen eines Aktivkohle enthaltenden Bauteils 101 und die andere das Einsetzen und Entnehmen einer Vorrichtung zum Temperaturausgleich ermöglicht. Jede Öffnung 103 ist durch eine Schraubkappe 104 verschließbar. In anderen Ausgestaltungen, bei denen keine Vorrichtung zum Temperaturausgleich oder ein anderes Modul in das Gehäuse 2, 3 des Aktivkohleadsorbers eingesetzt werden soll, reicht prinzipiell eine einzige Öffnung 103 aus.

Bei der dargestellten bevorzugten Ausführungsform der Erfindung ist die Aktivkohle in einer Filterpatrone 101 untergebracht, die als Rohr, und zwar als gerades, zylindrisches Rohr, ausgebildet ist. Die Kohlepartikel sind in den Wänden des Rohres 101 untergebracht, die an ihren Enden verschlossen sind. Der Außendurchmesser des Rohres 101 ist etwas kleiner als der Durchmesser der Öffnungen 103 und die Länge des Rohres 101 ist etwas kleiner als der Durchmesser der beiden Gehäusehalbkugeln 2, 3 bzw. der Gehäusekugel. Deshalb ist das Rohr 101 problemlos in die Öffnungen 103 einsetzbar.

In einer bevorzugten, in den Zeichnungen jedoch nicht dargestellten Variante ist das Rohr 101 an einem seiner beiden Enden mit einer Verschlussplatte ausgestattet, welche maßlich derart auf die Maße einer der beiden Öffnungen 103 im Gehäuse 2, 3 des Aktivkohleadsorbers 100 abgestimmt ist, dass die Öffnung 103 durch die Verschlussplatte verschlossen werden kann. Die Verschlussplatte kann Vorsprünge und/oder Vertiefungen als Handhaben und/oder Befestigungsmittel wie beispielsweise ein Gewinde aufweisen, das mit einem Gewinde an der Öffnung 103 und/oder an der Schraubkappe 104 zusammenwirken kann.

In der in Fig. 8 dargestellten erfindungsgemäßen Ausführungsform kann in den Hohlraum 1011 des Rohres 101 eine Vorrichtung zum Temperaturausgleich, resp. ein Luftwärmer / Luftkühlermodul 102 eingeführt werden, wenn gewünscht. Bei Anwesenheit der Temperaturausgleichsvorrichtung 102 erreicht die Atemluft den Handwerker mit einer mit einer komfortablen, für ihn angenehmen Temperatur, die er in der Winterzeit warm wählen wird, um sich nicht zu erkälten. In der Sommerzeit kann er die Lufttemperatur kühler wählen, um nicht zu stark zu schwitzen.

Wie in der Fig. 8 weiter angedeutet, umfasst die Temperaturausgleichsvorrichtung 102 einen zylindrischen Hohlkörper 106 aus Kunststoff mit einem Warmluftkanal 1042 und mit einem Kaltluftkanal 1040, wobei die Kanäle 1042 und 1040 in Längsrichtung des Hohlkörpers 106 aneinander anschließen und in Fluidverbindung stehen.

Der Innendurchmesser des Warmluftkanals 1042 ist kleiner als der des Kaltluftkanals 1040 gestaltet; die Länge des Warmluftkanals 1042 ist wesentlich größer als die des Kaltluftkanals 1040. Im vorliegenden Ausführungsbeispiel ist der Warmluftkanal 1042 etwa viermal so lang wie der Kaltluftkanal 1040.

Um die zentrale Achse des Körpers 106 erstreckt sich in radialer Richtung ein Luftführungselement bzw. Luftumleitungselement über einen großen Teil der Gesamtlänge des Warmluftkanals 1042. Das Luftumleitungselement kann aber auch in einer anderen geeigneten Form angeordnet werden. Im vorliegenden Ausführungsbeispiel besitzt das Luftführungselement auch einen sogenannten Stern. Am Kaltluftkanal 1040 ist als Luftführungselement ein kreisscheibenförmiges Luftdrallelement 141 angeordnet, und zwar einstückig angeformt. Der Innendurchmesser des Luftdrallelements 141 ist etwa doppelt so groß wie derjenige des Kaltluftkanals 1040.Das Luftdrallelement 141 ist im Inneren mit mehreren Wirbelelementen ausgestattet, die sich in radialer Richtung um die zentrale Achse des Körpers 106 erstrecken, wobei jedes Wirbelelement hohl ist. In der bevorzugten Ausführungsform endet das Luftdrallelement 141 in einer ringförmigen Platte 144, welche in der gezeigten bevorzugten Ausführungsform nicht am Kaltluftkanal 1040, sondern am Warmluftkanal 1042 befestigt, insbesondere einstückig an diesem Kanal 1042 angeformt ist. Die ringförmige Platte 144 besitzt einen geringfügig kleineren Durchmesser als die zylindrische Wand des Luftdrallelements 141. Der Warmluftkanal 1042 und der Kaltluftkanal 1040 sind im Bereich der ringförmigen Platte 144 miteinander verbunden; im vorliegenden Ausführungsbeispiel einfach ineinandergesteckt und halten mit Presssitz. Im Hinblick darauf, eine besonders gute Erwärmung und Kühlwirkung zu erzielen, beträgt der Innendurchmesser des Luftdrallelements 141 in etwa das Doppelte von demjenigen des Warmluftkanals 1042. Das Funktionsprinzip der Temperaturausgleichsvorrichtung gemäß der Erfindung entspricht einem Vortex- bzw. Wirbelrohr-Prinzip und braucht daher hier nicht näher erläutert werden. Die gezeigten und beschriebenen Längen-/Durchmesserverhältnisse von Warmluftkanal 1042 und Kaltluftkanal 1040 im Gesamtkörper 102 gewährleisten jedenfalls einen für den menschlichen Gebrauch sinnvollen Luft-Temperaturausgleich.

In einer bevorzugten Ausführungsform ist der Erfindung ist vorgesehen, den Aktivkohleadsorber 100 über eine spezielle Befestigungseinheit 4 und anschließend über einen speziellen Adapter 15 am Hüftgurt 200 zu befestigen. Eine solche Art von Befestigung bringt den Aktivkohleadsorber 100 in die Nähe einer der Hände des Benutzers und erhöht somit den Bedienkomfort sehr.

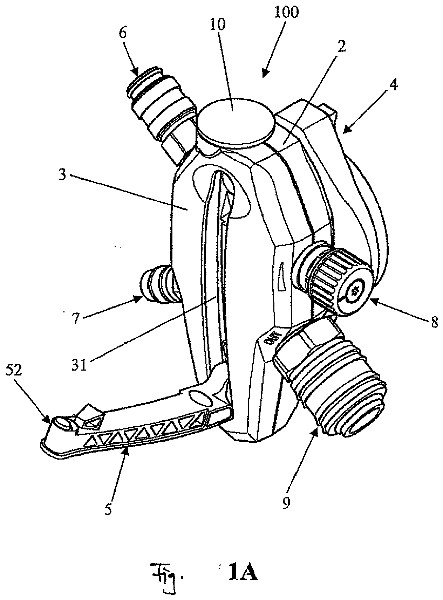

Das in den Fig. 1A, 1B, 2A, 2B, 4 und 5 zu sehende Gehäuse 2, 3 weicht zwar im Umriß und in gewissen Einzelheiten zwar vom Umriß und gewissen Einzelheiten des in Fig. 8 gezeigten Gehäuses 2, 3 ab. Wesentliche Einzelheiten stimmen jedoch überein, weswegen die Erfindung nachstehend auch anhand dieses Ausführungsbeispiels beschrieben wird.

Das Gehäuse 2, 3 auch dieses des Aktivkohleadsorbers umfasst demgemäß eine erste Halbschale 2 und eine zweite Halbschale 3. Beide Aktivkohleadsorber, d.h. derjenige nach den Fig. 1A, 1B, 2A, 2B, 4 und 5 sowie derjenige nach Fig. 8, können über ihr Gehäuse 2, 3 mittels der gleichen Befestigungseinheit 4 an einem Hüftgurt 200 angebracht werden und bei Bedarf wieder davon entfernt werden.

Der Aktivkohleadsorber 100 ist mit einem Lufteinlassverbinder 7 ausgestattet, über den Druckluft von einer externen Druckuftversorgung in den Aktivkoheladsorber 100 eingeführt werden kann. Ein Verbinder 6 für einen Schlauch oder dergleichen, welcher zu einer Atemschutzmaske oder-haube führt, ist auf der gleichen Seite des Gehäuses 2, 3 wie der Lufteinlassverbinder 7, jedoch oberhalb von diesem Lufteinlassverbinder 7 angeordnet. Weiterhin ist ein Anschluss 9 auf der anderen Seite des Aktivkohleadsorbers 100 angeordnet, der zur Ausgabe der Druckluft über einen Schlauch oder dergleichen zu einem druckluftbetriebenen Handwerkzeug wie einer Farbspritzpistole führt. Auf der gleichen Seite wie dieser Anschluss 9, jedoch oberhalb von diesem, befindet sich ein Regler 8, der dazu dient, um den Druck der Luft einstellen zu können, der zur Atemschutzmaske oder -haube führt. Aus Sicherheitsgründen ist der Regler 8 derart konfiguriert, dass der Aktivkohleadsorber 100 stets Luft mit einem vorbestimmten Druck an die Atemschutzmaske oder -haube liefert, selbst wenn der Regler 8 auf "minimal" eingestellt wird.

Der Verbinder 6 für den Anschluss mit der Atemschutzmaske oder -haube und / oder der Anschluss 9 für die Spritzpistole können bei Nichtverwendung des Aktivkohleadsorbers 100 durch einen Blinddeckel oder dergleichen verschlossen werden, wenn gewünscht.

Vorzugsweise kann der Aktivkohleadsorber 100 mit einer Druckanzeige verbunden werden (in den Figuren nicht dargestellt).

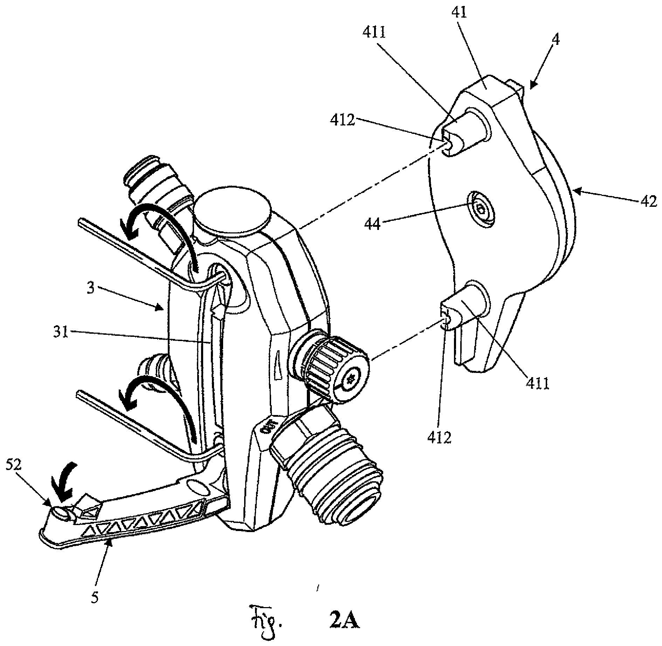

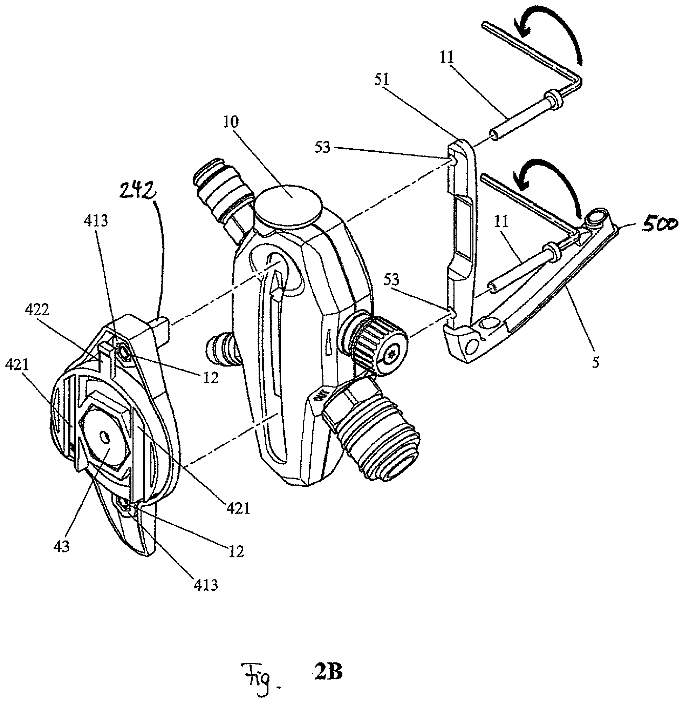

In einer bevorzugten Ausführungsform, die in den wie in den Fig. 2A, 2A und 8 näher gezeigt ist, ist die zweite Halbschale 3 des Aktivkohleadsorbers 100 mit einem abklappbaren bzw. drehbaren Halter 5 versehen, an dem die Spritzpistole oder der Atemluftschlauch gehalten werden kann, wenn die Spritzpistole oder die Atemschutzmaske oder -haube nicht benutzt wird. Wie in Fig. 2B gezeigt, ist ein erster Arm des hier zweiarmig ausgebildeten Halters 5 an dem Aktivkohleadsorber 100 mittels einer Schraube 11 befestigt. Der andere, zweite Arm des Halters 5 ist gelenkig mit dem ersten Arm verbunden und steht ansonsten frei. Es kann gegenüber dem Aktivkohleadsorber 100 verdreht werden.

Wie in Fig. 2A angedeutet, kann der zweite Arm des Halters 5 in einem Winkel zwischen 20 ° bis 90 ° gedreht werden, vorzugsweise in einem Winkel von 70 °. Ferner ist ein erstes Verriegelungselement 52, vorzugsweise ein Magnet, am freien Ende des zweiten Arms des Halters 5 vorgesehen. Das Verriegelungselement 52 wirkt mit einem zweiten Verriegelungselement (vorzugsweise mit einem Magnet) zusammen, das an dem Aktivkohleadsorber 100 vorgesehen ist. Im vorliegenden Ausführungsbeispiel ist das zweite Verriegelungselement am Halter 5 im Bereich eines Plattensitzes 51 befestigt, welcher am oberen nicht freien Ende des ersten Armes des Halters 5 vorgesehen ist. Zusammenfassend kann der Halter 5 in eingeklappter Stellung bei Nichtgebrauch sicher an der Aktivkohleadsorber 100 gehalten werden. Und vorzugsweise ist, wie in den Fig.2A und 2B gezeigt ist, eine vertiefte Nut 31 in die zweite Halbschale 3 des Gehäuses eingelassen. Die Nut 31 ist maßlich derart auf den Halter 5 abgestimmt, dass der zweite Arm in eingeklappter Stellung bündig in der Nut 31 liegt, bis auf eine Handhabe 500 am oberen Ende.

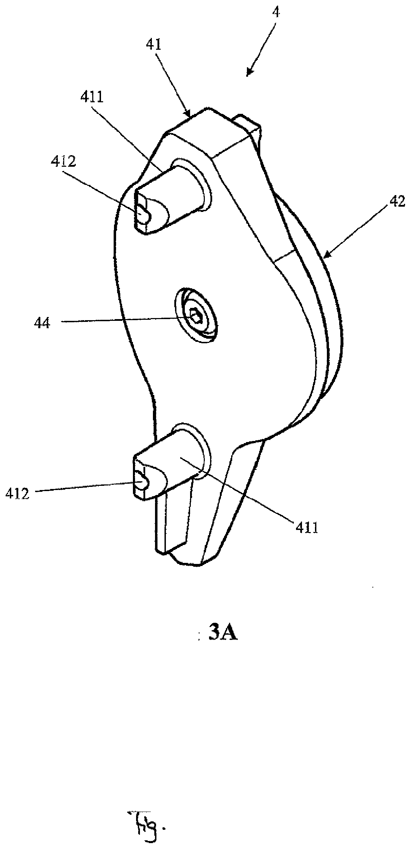

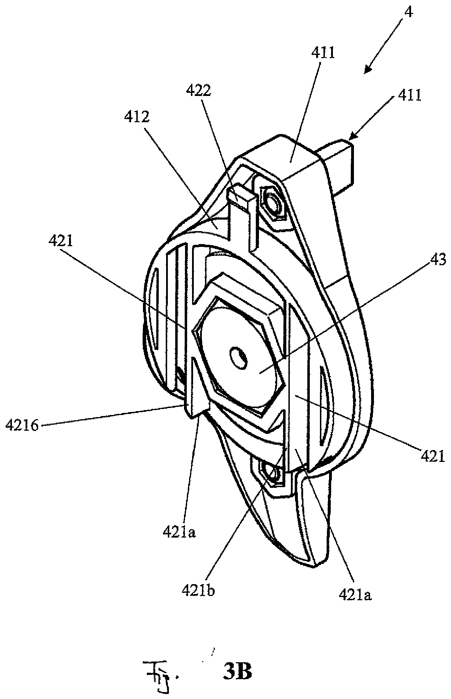

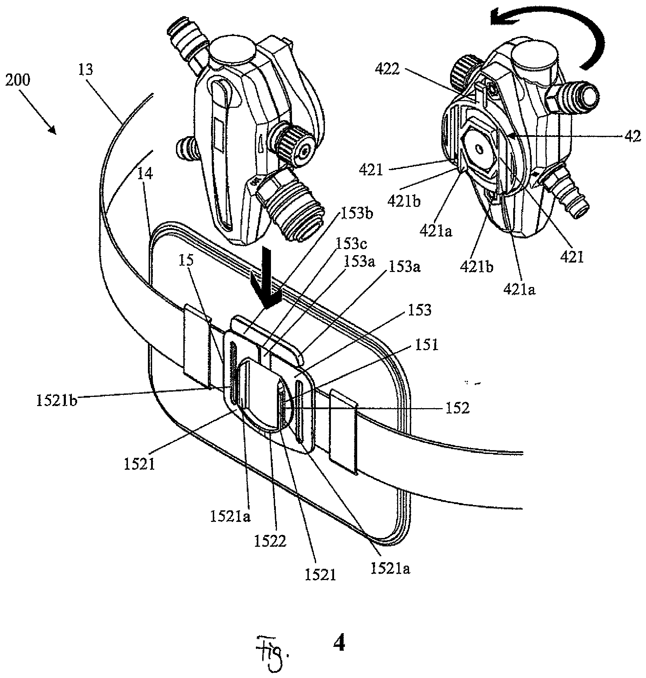

Die Fig. 3A und 3B veranschaulichen jeweils die Befestigungseinheit 4 des Aktivkohleadsorbers 100 in Vorderansicht und Rückansicht. Die Befestigungseinheit 4 umfasst Verbindungselemente 41, 42, die dazu geeignet sind, um die erste Halbschale 2 des Gehäuses des Aktivkohleadsorbers 100 mit einem Adapter 15 zu verbinden, der zu einem Hüftgurt 200 gehört (s. Fig. 4).

Wie in den Fig. 3A und 3B gezeigt, besitzt das im vorliegenden Ausführungsbeispiel im Wesentlichen oval gestaltete erste Verbindungselement 41 der Befestigungseinheit 4 zwei hohle Vorsprünge 411, die oben und unten am Verbindungselement 41 angeordnet sind und die in Richtung der ersten Halbschale 2 des Gehäuses des Aktivkohleadsorbers vorstehen. Eine Befestigungsbohrung 412 ist in jeden Vorsprung 411 eingelassen. Die erste Halbschale 2 weist entsprechende Befestigungslöcher auf, in welche die Vorsprünge 411 eingesetzt werden können. Wie in Fig. 3B weiter gezeigt, werden Schrauben 11 verwendet, welche durch die oben und unten am ersten Arm des Halters 5 befindlichen Plattensitze 51 durch dort eingelassene Befestigungslöcher 53 greifen, und anschließend durch Befestigungslöcher in der ersten Halbschale 2 und in der zweiten Halbschale 3 des Gehäuses des Aktivkohleadsorbers 100. An den Vorsprüngen 411 ist die Befestigungseinheit 4 mittels Bolzen 12 befestigt. Um eine besonders sichere Befestigung erhalten, sind Bolzensitze 413 für Schrauben oder dergleichen vorgesehen.

Wie in Fig. 3B gezeigt ist, sind zwei Gleitschlitze 421 an dem Adapterbereich 42 des Befestigungselements 4 vorgesehen. Der Adapterbereich 42 ist im Umriss kreisrund. Ein Anschlagkontakt 422 steht von der Umfangsfläche des Adapterbereichs 42 von der Oberseite des Adapterbereichs 42 ab. Zwei parallele Vorsprünge 421b, die nahe der Mitte des Adapters 42 von der Kreisfläche vorstehen, stellen jeweils die Oberseite einer Innenwand 421a für einen der beiden Gleitschlitze 421. Hierüber kann die Verbindung zwischen dem Aktivkohleadsorber 100 mit einem Hüftgurt 200 auf erfindungsgemäße Weise bewerkstelligt werden.

Der in den Fig. 10 und 11 angedeutete Hüftgurt 200 umfasst ein Taillenband 13, das an seiner Innenseite mit einem Polster 14 ausgestattet ist. An seiner Außenseite ist das Taillenband 13 mit einem Adapter 15 für die Befestigungseinheit 4 der Aktivkohleadsorber 100 ausgestattet.

Der Adapter 15 weist eine Trägerplatte 151, durch die Trägerplatte 151 abgestützte eine Befestigungsplatte 152 und einen Freigabemechanismus 153 auf. An dem Adapter 15 sind zwei Führungsschienen 1521 vorgesehen, die in Lage und Form auf die zwei Gleitschlitze 421 an dem Adapterbereich 42 des Befestigungselements 4 abgestimmt sind. Ein Anschlagelement 1522 verbindet die beiden Führungsschienen 1521 an ihren unteren Enden; der Anschlag 1522 und die beiden Führungsschienen 1521 bilden somit im Wesentlichen eine "U"-Form. Jede Führungsschiene 1521 umfasst eine Rippe 1521a, die von der Befestigungsplatte 152 vorsteht. Die beiden Rippen 1521a sind an der Befestigungsplatte 152 entlang der Längsrichtung des Taillenbandes 13 angeordnet und verlaufen entlang der Breitenrichtung des Taillenbandes 13 parallel zueinander. Der obere Teil jeder Rippe 1521a ist mit einem Vorsprung 1521b ausgestattet, der nach außen in der Längsrichtung des Taillenbandes vorsteht. Jeder Vorsprung 1521 b definiert an der Befestigungsplatte 152 eine Führung bzw. Klammer für die Gleitschlitze 421 an dem Adapterbereich 42 des Befestigungselements 4.

Der Freigabemechanismus 153 besitzt einen einarmigen Hebel 153a und einen Handgriff 153 b, der mit dem Hebel 153a verbunden ist. Wie in Fig. 10 gezeigt, liegt der Hebel 153a in einer Aussparung des oberen Teils der Befestigungsplatte 152. Der Hebel 153a ist aus einem relativ flexiblen Material hergestellt ist, weshalb er verformt werden kann, wenn Druck auf den Handgriff 153b ausgeübt wird. Im vorliegenden Ausführungsbeispiel ist der Hebel 153a einstückig mit der Befestigungsplatte 152 hergestellt und aus dieser Platte 152 herausgeschnitten. Der Griff 153b ist einstückig an dem oberen Ende des Hebels 153a angeformt. Die Oberfläche des Handgriff 153b ist im vorliegenden Ausführungsbeispiel größer als die Oberfläche des Hebels, wodurch eine Anschlagfläche 153c zwischen dem Handgriff 153b und dem Hebel 153a gebildet wird.

In Fig. 4 ist näher gezeigt, wie der Aktivkohleadsorber 100 über den Adapterbereich 42 der Befestigungseinheit 4 am auf den Hüftgurt 200 über dessen Adapter 15 befestigt und wieder davon gelöst werden kann. Die Führungsschienen 1521 der Befestigungsplatte 152 des Adapters 15 können nach entsprechendem Ausrichten durch einen nach unten gerichteten Druck in die Gleitschlitze 421 des Adapterbereichs 42 der Befestigungseinheit 4 eingeführt werden. Da dann die Vorsprünge 421b der Gleitschlitze 421 und die Vorsprünge 1521b der Führungsschienen 1521 einandergreifen, ist der Aktivkohleadsorber 100 sicher am Hüftgurt 200 befestigt. Das Anschlagelement 1522 an dem Adapter 15 beschränkt die Gleitbewegungen nach unten, so dass ein unerwünschtes Absinken der Aktivkohleadsorbers 100 verhindert wird. Das obere Ende des Anschlagkontakts 422 an der Befestigungseinheit 4 verhindert, dass die Anschlagfläche 153c des Freigabemechanismus 153 des Adapters 15 in unerwünschten Kontakt mit dem Aktivkohleadsorber 100 kommt.

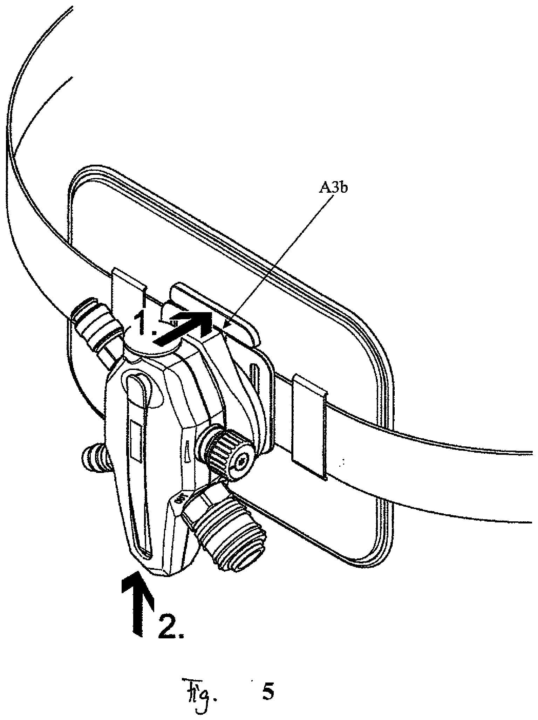

Wie in Fig. 5 gezeigt, kann das Entfernen des Aktivkohleadsorbers 100 vom Hüftgurt 200 auf einfache Weise bewirkt werden. Durch Inkontaktbringen des Anschlagkontakts 422 an der Befestigungseinheit 4 und der Anschlagfläche 153c des Hebels 153a durch Drücken des Griffs 153b in Pfeilrichtung 1 (Fig. 4), d.h. zum Träger des Hüftgurts 200 hin, wird der Freigabemechanismus 153 ausgelöst und der Aktivkohleadsorber 100 kann durch Bewegen nach oben in Pfeilrichtung 2 (Fig. 5) abgenommen werden.

Obwohl die Ausführungsform lediglich ein Beispiel mit Gleitschlitzen 421 auf dem Adapterbereich 42 der Befestigungseinheit 4 und Führungsschienen 152 am Adapter 15 des Hüftgurts 200 beschreibt und zeigt, können andererseits Gleitschlitze an dem Adapter Führungsschienen an der Befestigungseinheit vorgesehen werden. Auch andere Arten von Gleit- oder Schiebeverbindungen oder jede andere lösbare Verbindung wie beispielsweise Klips- oder Rastverbindungen sind möglich.

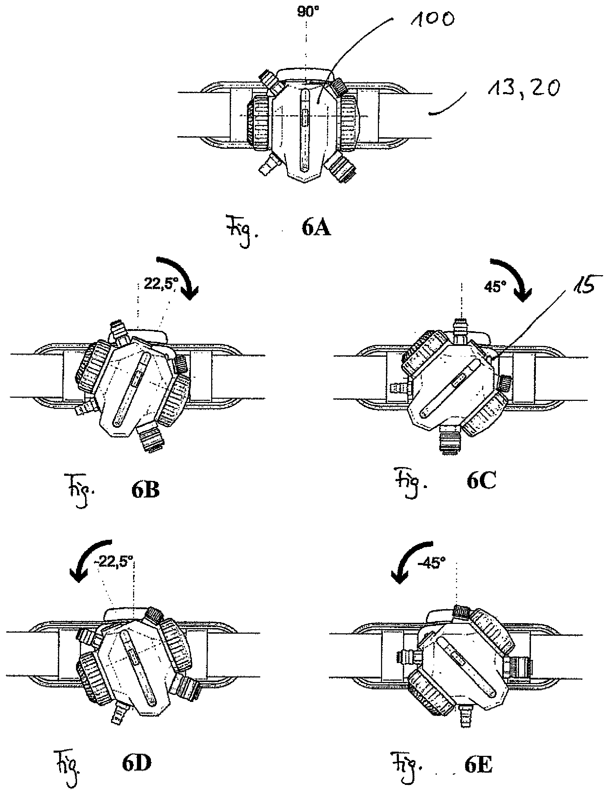

Wie in den Fig. 9A und 9B noch gezeigt ist, sind der Adapter 42 und das Verbindungselement 41 der Befestigungseinheit 4 durch eine dünne Sechskantmutter 43 und eine Schraube 44 verbunden. Da der Adapter 42 mit dem Verbindungselement 41 verbunden ist, können in Bezug zu drehen einander kann der Aktivkohleadsorber 100 (oder ein anderes an der Befestigungseinheit 4 befestigte Modul) in Bezug auf den Hüftgurt 200 verdreht werden (s. Fig. 6A bis 6E des vorherigen Ausführungsbeispiels). Das trägt zu einer weiteren Komfortsteigerung für den Bediener bei.

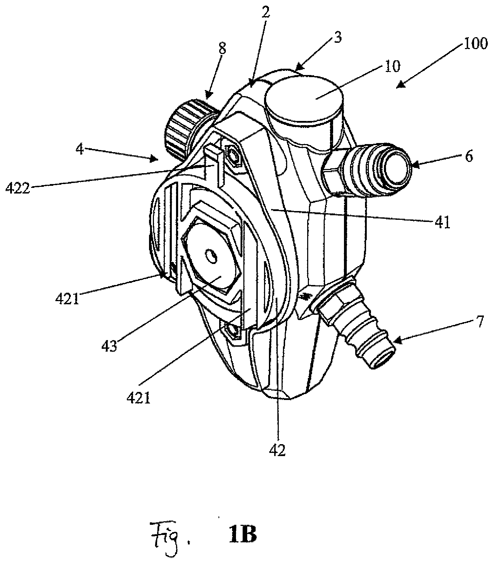

Ferner ist, wie in den Fig. 1A, 1B und 8 gezeigt, der Aktivkohleadsorber 100 mit einem Farbcodesystem-Scheibe 10 (CCS-Disc) ausgestattet. Im vorliegenden Ausführungsbeispiel ist eine kreisrunde Vertiefung auf der Oberseite des Gehäuses 2,3 des Aktivkohleadsorbers 100 eingelassen, in welche die ebenfalls kreisrunde Farbcodesystem-Scheibe 10 eingeklipst werden kann.

Verschiedene Aktivkohleadsorber 100 können mit einer Farbcodesystem-Scheibe 10 unterschiedlicher Farbe personalisiert werden. Oder es können dadurch auf einfache Weise verschiedene Aktivkohleadsorber verschiedenen Atemschutzmasken oder -hauben zugeordnet werden. Andere Befestigungsarten und Farbcodesystem-Formen sind selbstverständlich möglich.

Die Verwendung anderer Kennzeichen als Farbcodesystem-Scheiben ist selbstverständlich möglich. Mittels der Kennzeichen wird jedenfalls die Sicherheit von Atemschutzvorrichtungen weiter verbessert.

Bevorzugt sind alle Elemente oder Teilelemente des Aktivkohleadsorbers 100 aus Kunststoff hergestellt. In einer anderen möglichen Ausführungsform können die beiden Halbschalen 2,3 des Gehäuses unterschiedliche Farben haben. Wenn die Farben der Halbschalen auf die Farben des Hüftgurts bzw. des Adapters 15 abgestimmt sind, können Montagefehler nahezu ausgeschlossen werden.

In weiterer Ausgestaltung der Erfindung kann am Hüftgurt an mehreren Stellen ein Anschluss mit dem Aktivkohleadsorber erfolgen kann. Bevorzugt sollten zwei Stellen gewählt werden, die später an der linke Seite und der rechten Seite der Taille des Benutzers liegen, wenn der Hüftgurt vom Benutzer getragen wird. Dann kann der Aktivkohleadsorber von Benutzern von einer Seite zur anderen gewechselt werden, weshalb die Gurteinheit problemlos von Links- und Rechtshänder verwendet werden kann.

## Patentansprüche

1. Aktivkohleadsorber (100), der ein Gehäuse (2, 3) zur Aufnahme einer Filterpatrone (101) besitzt, welches folgende Merkmale aufweist:
- einen Lufteinlass-Anschluss (9), um Druckluft von Luftversorgungseinheit zu empfangen;
- einen Verbinder (6) zum Anschluss an eine Atemschutzmaske oder -haube,
- eine Einheit (4, 42), die auf dem Körper bzw. auf oder an dem Gehäuse (2, 3) des Aktivkohleadsorbers (100) befestigbar ist und die in der Lage ist, um eine lösbare Verbindung, insbesondere eine Schiebe- oder Gleitverbindung mit einer anderen Komponente (15) einzugehen, wobei die Filterpatrone (101) als Rohr ausgebildet ist, **dadurch gekennzeichnet, dass** sich Kohlepartikel im Inneren der Wände des Rohres (101) befinden und dass ein Luftwärmer und/oder Luftkühlermodul (102) in den Hohlraum (1011) des Rohrs (101) eingeführt ist.

2. Aktivkohleadsorber (100) nach Anspruch 1, **dadurch gekennzeichnet, dass** das Gehäuse (2, 3) auf zwei einander gegenüberliegenden Seiten mit jeweils einer Öffnung (103) versehen ist, die das Einfügen der Filterpatrone (101) ermöglicht, wobei die Öffnung (103) verschließbar, insbesondere durch eine Schraubkappe (2, 3) verschließbar ist.

3. Aktivkohleadsorber (100) nach Anspruch 2, **dadurch gekennzeichnet, dass** die Filterpatrone (101) in die eine der beiden Öffnungen (103) und das Luftwärmer und / oder Luftkühlermodul (102) in die andere der beiden Öffnungen (103) eingeführt werden kann.

4. Aktivkohleadsorber (100) nach einem der vorhergehenden Ansprüche, **dadurch gekennzeichnet, dass** der Adapter (42) mit einem oder mehreren Gleitschlitzen (421) gleitend mit entsprechenden Führungsschienen (1521) einer anderen Komponente (15) verbunden werden kann, wobei insbesondere wenigstens ein Vorsprung (1521b) vorhanden ist, der umklammert werden kann bzw. umklammern kann.

5. Aktivkohleadsorber (100) nach Anspruch 1, **dadurch gekennzeichnet, dass** das Gehäuse (2, 3) konfiguriert ist, um sich zu drehen.

6. Aktivkohleadsorber (100) nach den Ansprüchen 4 und 5, **dadurch gekennzeichnet, dass** das Gehäuse (2,3) konfiguriert ist, um an einem Adapter (15) an mehreren Positionen von Drehwinkeln in Eingriff gebracht zu werden.

7. Aktivkohleadsorber (100) nach einem der Ansprüche 4 bis 6, **dadurch gekennzeichnet, dass** ein Adapter (42) mit einem Anschlagkontakt (422) vorgesehen ist, welcher einen Anschlagkontakt (153c) eines anderen Bauteils sperren kann, nachdem der Adapter gleitend mit dem anderen Bauteil verbunden ist.

8. Aktivkohleadsorber (100) nach einem der vorhergehenden Ansprüche, **dadurch gekennzeichnet, dass** der Aktivkohleadsorber (100) mit einem Halter (5) versehen ist, der insbesondere wenigstens bereichsweise gegenüber dem Gehäuse (2,3) schwenkbar befestigt ist.

9. Aktivkohleadsorber (100) nach Anspruch 8, **dadurch gekennzeichnet, dass** der Schwenkwinkel zwischen 20 ° bis 90 °, vorzugsweise bei 70 ° liegt oder dass ein Verriegelungselement (52) an einem freien Ende des Halters (5) festgelegt und ein korrespondierendes Verriegelungselement am Gehäuse (2, 3) festgelegt ist, so dass das freie Ende (5) an dem Gehäuse (2, 3) verriegelt ist, wenn der Halter (5) zusammengeklappt ist.

10. Aktivkohleadsorber (100) nach einem der vorhergehenden Ansprüche, **dadurch gekennzeichnet, dass** der Aktivkohleadsorber (100) einen Anschluss (9) zur Verbindung mit einem druckluftbetriebenen Handwerkzeug wie einer Farbspritzpistole oder dergleichen aufweist.

11. Kombination mit einem Aktivkohleadsorber (100) nach einem der vorhergehenden Ansprüche und mit einer Gurteinheit (200), wobei die Gurteinheit (200) wenigstens einen Adapter (15) aufweist, welcher mit dem Aktivkohleadsorber (100) und/oder mit der Befestigungseinheit (4) eine lösbare Gleitverbindung eingehen kann.

12. Kombination nach Anspruch 11, **dadurch gekennzeichnet, dass** die Gurteinheit (200) einen Freigabemechanismus (153) für den Aktivkohleadsorber (100) und/oder für die Befestigungseinheit (4) aufweist, oder dass wenigstens eine Führungsschiene (1521) und wenigstens ein Anschlagteil (1522) vorgesehen ist, oder dass wenigstens eine Führungsnut und wenigstens ein Anschlagteil vorgesehen ist, oder dass wenigstens eine Sicherungsfläche (153, 1521b) vorhanden ist.

13. Kombination nach Anspruch 12, **dadurch gekennzeichnet, dass** der Freigabemechanismus (153) ein Hebelmechanismus (5) ist, wobei der Hebel (153a) insbesondere mit dem Adapter (15) verbunden ist, wobei der Hebel (153a) insbesondere einarmig und aus einem Bereich des Adapters (15) herausgeschnitten ist und/oder der Hebel (153a) insbesondere aus einem flexiblen Material hergestellt ist.

14. Kombination nach einem der Ansprüche 11 bis 13, **dadurch gekennzeichnet, dass** durch Inkontaktbringen eines Anschlagkontakts (422) an der Befestigungseinheit (4) und der Anschlagfläche (153c) des Hebels (153a) durch Drücken des Griffs (153b) der Freigabemechanismus (153) ausgelöst und der Aktivkohleadsorber (100) von der Gurteinheit (200) abgenommen werden kann.

15. Kombination nach einem der Ansprüche 11 bis 15, **dadurch gekennzeichnet, dass** der Aktivkohleadsorber (100) auf der Seite mit der Befestigungseinheit (4) mit einem Polster (14) unterlegt ist und/oder dass an mehreren Stellen ein Anschluss mit dem Aktivkohleadsorber (100) erfolgen kann.

## Claims

1. Activated carbon adsorber (100) having a housing (2, 3) for receiving a filter cartridge (101), which has the following features:
- an air inlet connection port (9) for receiving compressed air from an air supply unit;
- a connector (6) for connection to a respiratory protection mask or hood,
- a unit (4, 42) which is able to be fastened on the body or on or to the housing (2, 3) of the activated carbon adsorber (100) and which is able to enter into a releasable connection, in particular a sliding connection, with another component (15), wherein the filter cartridge (101) is designed in the form of a tube, **characterized in that** carbon particles are present within the walls of the tube (101), and **in that** an air heater and/or air cooler module (102) are/is inserted into the hollow space (1011) of the tube (101).

2. Activated carbon adsorber (100) according to Claim 1, **characterized in that** the housing (2, 3) is provided on two sides, opposite one another, with in each case one opening (103) which allows the insertion of the filter cartridge (101), wherein the opening (103) is able to be closed off, in particular is able to be closed off by a screw-type cap (2, 3).

3. Activated carbon adsorber (100) according to Claim 2, **characterized in that** the filter cartridge (101) can be inserted into one of the two openings (103) and the air heater and/or air cooler module (102) can be inserted into the other one of the two openings (103).

4. Activated carbon adsorber (100) according to one of the preceding claims, **characterized in that** the adaptor (42) can be slidingly connected with one or more slide slots (421) to corresponding guide rails (1521) of another component (15), wherein in particular, at least one projection (1521b) is present, which can be embraced or which can embrace.

5. Activated carbon adsorber (100) according to Claim 1, **characterized in that** the housing (2, 3) is configured for rotating.

6. Activated carbon adsorber (100) according to Claims 4 and 5, **characterized in that** the housing (2, 3) is configured for being brought into engagement on an adaptor (15) at multiple rotation angle positions.

7. Activated carbon adsorber (100) according to one of Claims 4 to 6, **characterized in that** an adaptor (42) is provided with a stop contact (422) which is able to block a stop contact (153c) of another component after the adaptor has been slidingly connected to the other component.

8. Activated carbon adsorber (100) according to one of the preceding claims, **characterized in that** the activated carbon adsorber (100) is provided with a holder (5) which, in particular, is fastened so as to be pivotable with respect to the housing (2, 3) at least regionally.

9. Activated carbon adsorber (100) according to Claim 8, **characterized in that** the pivot angle lies between 20° and 90°, and is preferably 70°, or **in that** a lock element (52) is fixed to a free end of the holder (5) and a corresponding lock element is fixed to the housing (2, 3), with the result that the free end (5) is locked to the housing (2, 3) when the holder (5) is in the folded-together state.

10. Activated carbon adsorber (100) according to one of the preceding claims, **characterized in that** the activated carbon adsorber (100) has a port (9) for connection to a compressed-air-operated hand tool such as a paint-spraying gun or the like.

11. Combination having an activated carbon adsorber (100) according to one of the preceding claims and having a belt unit (200), wherein the belt unit (200) has at least one adaptor (15) which is able to enter into a releasable sliding connection with the activated carbon adsorber (100) and/or with the fastening unit (4).

12. Combination according to Claim 11, **characterized in that** the belt unit (200) has a release mechanism (153) for the activated carbon adsorber (100) and/or for the fastening unit (4), or **in that** at least one guide rail (1521) and at least one stop part (1522) are provided, or **in that** at least one guide groove and at least one stop part are provided, or **in that** at least one securing surface (153, 1521b) is provided.

13. Combination according to Claim 12, **characterized in that** the release mechanism (153) is a lever mechanism (5), wherein the lever (153a) is in particular connected to the adaptor (15), wherein the lever (153a) is in particular one-armed and cut out from a region of the adaptor (15) and/or the lever (153a) is produced in particular from a flexible material.

14. Combination according to one of Claims 11 to 13, **characterized in that**, by bringing into contact a stop contact (422) on the fastening unit (4) and the stop surface (153c) of the lever (153a) by pressing the grip (153b), the release mechanism (153) can be triggered and the activated carbon adsorber (100) can be removed from the belt unit (200).

15. Combination according to one of Claims 11 to 15, **characterized in that** the activated carbon adsorber (100) is underlaid with a pad (14) on the side with the fastening unit (4) and/or **in that** a connection to the activated carbon adsorber (100) can be realized at multiple positions.

## Revendications

1. Adsorbeur à charbon actif (100), lequel comporte un boîtier (2, 3) destiné à loger une cartouche filtrante (101), lequel boîtier présente les caractéristiques suivantes :
- un raccord d'entrée d'air (9) servant à recevoir de l'air comprimé en provenance d'une unité d'alimentation en air ;
- un connecteur (6) servant au raccordement à un masque ou une cagoule de protection respiratoire,
- une unité (4, 42) qui peut être fixée sur le corps, respectivement sur ou contre le boîtier (2, 3) de l'Adsorbeur à charbon actif (100) et qui est en mesure de réaliser une liaison libérable, en particulier une liaison à coulissement ou à glissement, avec un autre composant (15), la cartouche filtrante (101) étant réalisée sous forme de tube (101), **caractérisé en ce que** des particules de carbone se trouvent à l'intérieur des parois du tube (101) et **en ce qu'**un réchauffeur d'air et/ou un module de refroidissement d'air (102) sont introduits dans l'espace creux (1011) du tube (101).

2. Adsorbeur à charbon actif (100) selon la revendication 1, **caractérisé en ce que** le boîtier (2, 3) est doté, sur deux côtés opposés l'un à l'autre, d'une ouverture (103) respective qui permet l'insertion de la cartouche filtrante (101), l'ouverture (103) pouvant être fermée, en particulier pouvant être fermée par un capuchon fileté (2, 3).

3. Adsorbeur à charbon actif (100) selon la revendication 2, **caractérisé en ce que** la cartouche filtrante (101) peut être introduite dans l'une des deux ouvertures (103) et le réchauffeur d'air et/ou le module de refroidissement d'air (102) peuvent être introduits dans l'autre des deux ouvertures (103) .

4. Adsorbeur à charbon actif (100) selon l'une quelconque des revendications précédentes, **caractérisé en ce que** l'adaptateur (42) peut être relié, par une ou plusieurs fentes de glissement (421), de manière glissante à des rails de guidage (1521) correspondants d'un autre composant (15), au moins une saillie (1521b) étant en particulier prévue, laquelle peut être enserrée ou peut enserrer.

5. Adsorbeur à charbon actif (100) selon la revendication 1, **caractérisé en ce que** le boîtier (2, 3) est configuré pour tourner.

6. Adsorbeur à charbon actif (100) selon les revendications 4 et 5, **caractérisé en ce que** le boîtier (2, 3) est configuré pour être amené en prise sur un adaptateur (15) en plusieurs positions d'angles de rotation.

7. Adsorbeur à charbon actif (100) selon l'une quelconque des revendications 4 à 6, **caractérisé en ce qu'**un adaptateur (42) est doté d'un contact de butée (422), lequel peut bloquer un contact de butée (153c) d'un autre élément après que l'adaptateur a été relié de manière glissante à l'autre élément.

8. Adsorbeur à charbon actif (100) selon l'une quelconque des revendications précédentes, **caractérisé en ce que** l'Adsorbeur à charbon actif (100) est doté d'un support (5) qui est fixé de manière pivotante par rapport au boîtier (2, 3) en particulier au moins dans certaines zones.

9. Adsorbeur à charbon actif (100) selon la revendication 8, **caractérisé en ce que** l'angle de pivotement est compris entre 20° et 90°, en particulier est égal à 70°, ou **en ce qu'**un élément de verrouillage (52) est fixé à une extrémité libre du support (5) et un élément de verrouillage correspondant est fixé au boîtier (2, 3), de telle sorte que l'extrémité libre (5) soit verrouillée sur le boîtier (2, 3) lorsque le support (5) est replié.

10. Adsorbeur à charbon actif (100) selon l'une quelconque des revendications précédentes, **caractérisé en ce que** l'Adsorbeur à charbon actif (100) comprend un raccord (9) servant à la liaison avec un outil à main pneumatique tel qu'un pistolet pulvérisateur à peinture ou similaire.

11. Combinaison comprenant un Adsorbeur à charbon actif (100) selon l'une quelconque des revendications précédentes et une unité de ceinture (200), l'unité de ceinture (200) comprenant au moins un adaptateur (15), lequel peut réaliser une liaison à glissement libérable avec l'Adsorbeur à charbon actif (100) et/ou avec l'unité de fixation (4).

12. Combinaison selon la revendication 11, **caractérisée en ce que** l'unité de ceinture (200) comprend un mécanisme de libération (153) pour l'Adsorbeur à charbon actif (100) et/ou pour l'unité de fixation (4), ou **en ce qu'**au moins un rail de guidage (1521) et au moins une partie de butée (1522) sont prévus, ou **en ce qu'**au moins une rainure de guidage et au moins une partie de butée sont prévues, ou **en ce qu'**au moins une surface de fixation (153, 1521b) est prévue.

13. Combinaison selon la revendication 12, **caractérisée en ce que** le mécanisme de libération (153) est un mécanisme à levier (5), le levier (153a) étant relié en particulier à l'adaptateur (15), le levier (153a) étant en particulier à bras unique et étant découpé dans une région de l'adaptateur (15) et/ou le levier (153a) étant fabriqué en particulier à partir d'un matériau souple.

14. Combinaison selon l'une quelconque des revendications 11 à 13, **caractérisée en ce que**, par mise en contact d'un contact de butée (422) sur l'unité de fixation (4) et de la surface de butée (153c) du levier (153a), par pression de l'élément de préhension (153b), le mécanisme de libération (153) est libéré et l'Adsorbeur à charbon actif (100) peut être retiré de l'unité de ceinture (200).

15. Combinaison selon l'une quelconque des revendications 11 à 15, **caractérisée en ce que** l'Adsorbeur à charbon actif (100) est supporté par un rembourrage (14) sur le côté comprenant l'unité de fixation (4) et/ou **en ce qu'**un raccordement à l'Adsorbeur à charbon actif (100) peut s'effectuer en plusieurs emplacements.
